# EUROPEAN PATENT APPLICATION

(11) **EP 2 915 918 A1**
(43) Date of publication of application: **09.09.2015**
(21) Application number: 13851040.9
(22) Date of filing: 28.08.2013
(51) Int. Cl.: D07B 1/00, A01K 27/00, A44B 99/00, B66C 1/18

(54) **ROPE WITH HOLES**

(30) Priority: 31.10.2012 JP 2012240108
(71) Applicant: Matsumoto, Sumihiro, Osaki-shi, Miyagi 989-6241 (JP); Matsumoto, Makoto, Higashihiroshima-shi, Hiroshima 739-2204 (JP)
(72) Inventor: Matsumoto, Sumihiro, Osaki-shi, Miyagi 989-6241 (JP); Matsumoto, Makoto, Higashihiroshima-shi, Hiroshima 739-2204 (JP)
(74) Representative: Grünecker Patent- und Rechtsanwälte PartG mbB
(86) International application number: PCT/JP2013/072988
(87) International publication number: WO 2014/069083

(57) **Abstract**

Provided is a rope that can be used even by those not familiar with ropework and whose knots will not loosen or come apart. A rope with holes has at least three bonded parts obtained by bonding two cords together at fixed intervals, as well as two openings formed between adjacent bonded parts. The rope with holes can be easily tied with another rope by guiding the other rope through its openings and the knots will not loosen or come apart.

## Description

### Technical Field

The present invention relates to a rope that can be tied with ease.

### Background Art

Ropes are fairly familiar tools but using them to their full extent requires techniques and knowledge called ropework. Ropework is a skill set to use ropes, such as tying and untying ropes effortlessly and without causing them to loosen or come apart during use. There are many ways to tie ropes and each of them has advantages and disadvantages, meaning that we must select an appropriate tying method for a given purpose and this makes it difficult to master ropework.

For this reason, Patent Literatures 1 and 2 each propose a buckle that allows for easy tying, but these buckles present a problem in that the strength of the buckle or that of the joint between the buckle and rope is lower than the strength of the rope and thus the strength of the rope cannot be utilized maximally.

### Background Art Literature

### Patent Literature

Patent Literature 1: Japanese Patent Laid-open No. 2011-142956
Patent Literature 2: Japanese Patent Laid-open No. 2010-270413

### Summary of the Invention

### Problems to Be Solved by the Invention

The object of the present invention is to provide a rope that can be tied and untied with ease even by those not familiar with ropework and that does not loosen or come apart while in use.

### Means for Solving the Problems

1. A rope with holes having at least three bonded parts obtained by bonding two cords together at fixed intervals, as well as openings formed between adjacent bonded parts.
2. A rope with holes according to 1, characterized in that the bonded parts are provided across the entire length of the rope.
3. A rope with holes according to 1 or 2, characterized in that, when the tensile strength of one cord forming the rope with holes is given by P and the number of cords forming the rope with holes is given by n, and when only one of the openings on both sides of a bonded part has another rope with holes guided through it, the bonded part has a breaking strength corresponding to the pulling of 0.8 nP to 0.97 nP cords.
4. A rope with holes according to any one of 1 to 3, characterized in that the two cords are continuously crossed in a pattern of sine waves with a phase difference of π and then bonded together at the crossed locations.
5. A rope with holes according to any one of 1 to 4, characterized in that the two cords have a cross-section of roughly circular shape.
6. A rope with holes according to 5, characterized in that the cords with a cross-section of roughly circular shape are kernmantle cords.
7. A rope with holes according to any one of 1 to 4, characterized in that the two cords are band-shaped.
8. A rope with holes according to 7, characterized in that the bonding at fixed intervals is done in such a way that the length of the opening becomes 1.2 times to 3 times the width of the band.
9. A pet lead constituted by a rope with holes according to any one of 1 to 8.
10. A crane sling constituted by a rope with holes according to any one of 1 to 8.

### Effects of the Invention

The rope with holes proposed by the present invention can be tied with ease simply by guiding a tip of the rope through multiple openings, and untied with ease simply by removing the tip from the openings one by one. When tied, the rope with holes proposed by the present invention becomes such that applying tension reduces the space between the two cords forming the openings and the rope guided through the openings is pinched strongly by the two cords forming the openings, resulting in increased contact area and greater maximum static friction force and consequently the inserted rope will not come out even when pulled. When the rope with holes proposed by the present invention is inserted, the narrow-width parts around the bonded parts of the inserted rope mesh with the wide-width parts around the openings of the base rope to make the knots stronger.

When the present invention is applied as a pet lead, its openings deform to absorb any force applied to the rope as a result of sudden, momentary action, meaning that both the animal and person leading it feel less shock and any damage to the lead is prevented.

When the present invention is used as a crane sling, two such ropes with holes can be tied with ease simply by guiding them through each other, where the knots are strong and will not come apart. In particular, belt strings using band-shaped cords ensure greater safety because they can secure loads in a stable manner.

### Brief Description of the Drawings

[Fig. 1] Drawing showing the structure of a kernmantle cord (a) and that of a three-stranded cord (b).

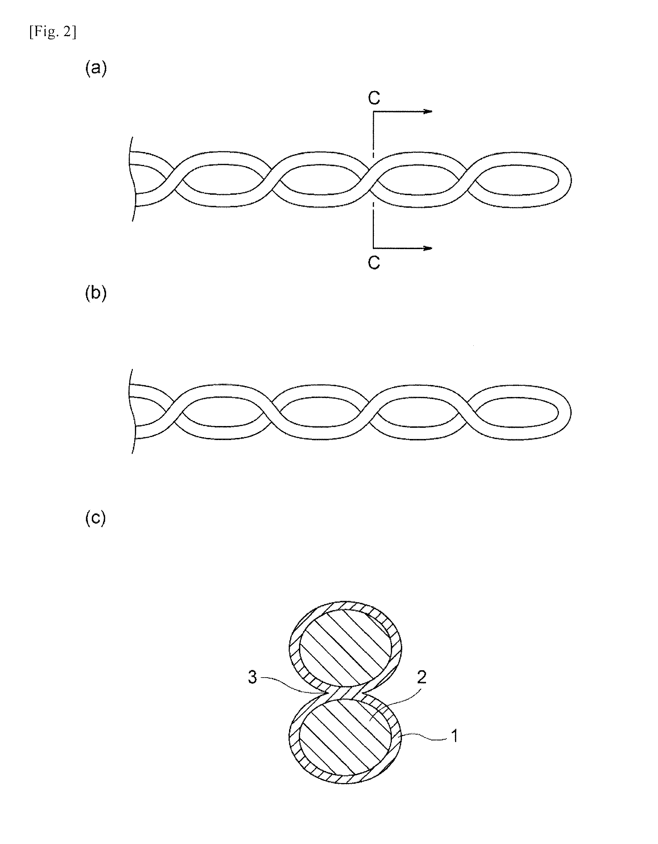

[Fig. 2] Drawing showing how a kernmantle cord of circular cross-section is folded back to provide two cords that are then continuously crossed in a pattern of sine waves with a phase difference of π and the crossed locations bonded together to make a rope with holes conforming to the present invention, where (a) shows the end of such rope where the two cords are interlaced by switching their top/bottom positions at each crossed location, (b) shows the end of such rope where the two cords are interlaced without switching their top/bottom positions at each crossed location, and (c) shows the cross-section of a bonded part.
[Fig. 3] Drawing showing a rope with holes having bonded parts at fixed intervals across its entire length (a) and a rope with holes having bonded parts at fixed intervals at both ends (b).
[Fig. 4] Drawing showing a rope with holes with its tip guided through four openings in such a way that the tip is flipped upside down alternately as it goes through each opening.
[Fig. 5] Drawing showing strong knots created by meshing the narrow-width parts around the bonded parts of the inserted rope with the wide-width parts around the openings of the base rope. [Fig. 6] A rope with holes conforming to the present invention in which no other rope is inserted, where (a) shows a condition where no tension is applied, while (b) shows a condition where tension is applied and the rope is stretched.
[Fig. 7] Drawing showing a rope with holes conforming to the present invention with other rope with holes guided through the multiple openings of the former.
[Fig. 8] Drawing showing the branching part of a ring formed by guiding a tip of a rope with holes conforming to the present invention through its own openings in middle parts.
[Fig. 9] Drawing showing how a rope with holes is guided through only one of two adjacent openings, where (a) shows the tension applied to bonded part C, (b) shows the force applied to the bottom cord at bonded part C, and (c) shows the force applied to the top cord at bonded part C.
[Fig. 10]Drawing showing a rope with holes according to an embodiment of the present invention, comprising two band-shaped cords interlaced and their surfaces bonded together at intervals twice the width of the band-shaped cord.
[Fig. 11] Drawing showing a rope with holes according to an embodiment of the present invention, comprising three cords interlaced in a pattern of sine waves with a phase difference ot 2π/3 and their crossed locations bonded together.
[Fig. 12] Drawing showing a rope with holes according to an embodiment of the present invention, comprising two thin-string cords interlaced and continuously crossed in a pattern of sine waves with a phase difference of π.

### Description of the Symbols

1. Outer sheath
2. Inner core
3. Bonded part
A. Inserted rope
B. Base rope
AT. Tip of the inserted rope
b1 to b4.Opening in the base rope
wa. Narrow-width part around the bonded part of the inserted rope
wb. Wide-width part around the opening of the base rope

### Mode for Carrying Out the Invention

The present invention is a rope with holes having at least three bonded parts obtained by bonding two cords together at fixed intervals, as well as openings formed between adjacent bonded parts.

The rope with holes proposed by the present invention has at least three bonded parts provided at fixed intervals, or preferably four or more bonded parts provided at fixed intervals. This way, a rope with holes having two or more openings is formed.

To form the rope with holes proposed by the present invention, any cords can be used without limitation. Preferably the cords have the same material and thickness. If the cords have different strengths and rates of elongation, when they are made into a rope with holes its strength drops due to a poor balance. The two cords may be parts of one cord being folded back.

The cord material may be nylon, polyester, polyethylene or other chemical fiber, or Manila hemp, cotton or other natural fiber. Chemical fibers are preferred because they have greater breaking strength than natural fibers.

The bonding method is not limited and any method may be selected as deemed appropriate according to the cord material, etc. For example, fusion, adhesion or sewing may be adopted for a chemical fiber rope. Adhesion, sewing, etc., can be adopted for a natural fiber rope. It is also possible, when twisting yarns to make cords, to weave together the material yarns of two cords at fixed intervals to form bonded parts.

For the rope with holes proposed by the present invention, any cord can be used without limitation, such as a cord whose cross-section has oval or other roughly circular shape, or rectangular or other polygonal shape, band-shaped cord, or the like.

Examples of a cord with roughly circular cross-section include, but are not limited to, kernmantle cord, three-stranded cord, and eight-stranded cord. The kernmantle cord and three-stranded cord are preferable, of which the kernmantle cord is more preferable. The three-stranded cord has deep irregularities on the rope surface, so when these cords are bonded together, their surface irregularities mesh and create strong knots. The kernmantle cord comprises an inner core and an outer sheath and has fixed flexibility in all directions, so a rope with holes comprising these cords is resistant to twisting. Kernmantle cords can be processed into a rope with holes by bonding together only their outer sheaths, without causing the performance of their inner cores to drop. At the same time, the outer sheaths can slide against the inner cores at the bonded parts to absorb the twisting, etc., of the rope with holes. On the other hand, bonding together parts of the inner cores along with the outer sheaths increases the shape preserving property at the bonded parts and leads to greater shape restorability after deformation.

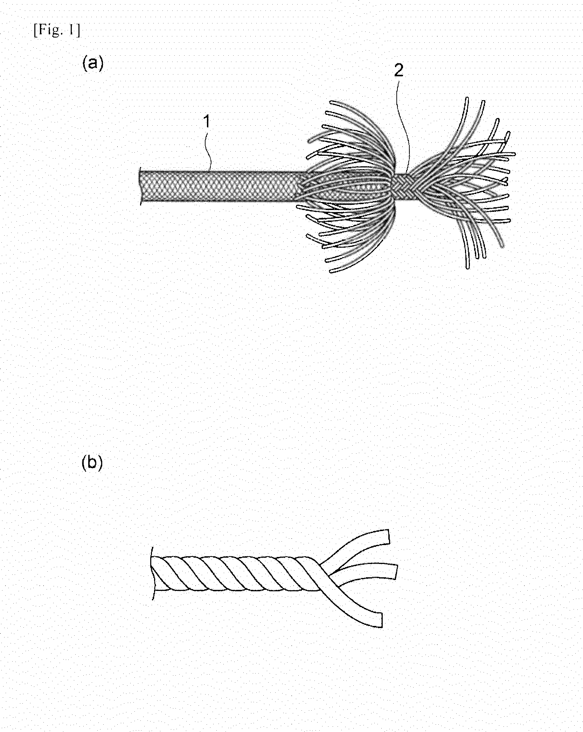

The structure of a kernmantle cord is shown in Fig. 1(a), while the structure of a three-stranded cord is shown in Fig. 1(b). An outer sheath 1 of the kernmantle cord is like a case made by braid-over-braid stitching. An inner core 2 is constituted by many line-shaped materials that are stranded or bundled together. The outer sheath 1 protects the surface and provides wear resistance, while the inner core 2 accounts for strength such as line strength.

A rope with holes conforming to the present invention can be formed by continuously crossing two cords in a pattern of sine waves with a phase difference of 2π/2 and then bonding them together at the crossed locations. When band-shaped cords are used to form a rope, the band-shaped cords would be interlaced and their surfaces bonded together at fixed intervals.

A rope with holes conforming to the present invention needs only to have at least three bonded parts where the two cords are bonded together at fixed intervals. It can also be formed with three or more cords. n number of cords can be made into a rope with holes conforming to the present invention by continuously crossing the cords in a pattern of sine waves with a phase difference of 2π/n and then bonding them together at the crossed locations. The material cords of a rope with holes conforming to the present invention may in turn be each formed by multiple thin strings. For example, two thin strings can be laid side by side in parallel to constitute a single cord and two such thin-string cords can be interlaced and continuously crossed in a pattern of sine waves with a phase difference of n to form a rope with holes.

The cords of the rope with holes proposed by the present invention may have their top/bottom positions switched or not switched at each crossed location. Switching the top/bottom positions gives a good structural balance and excellent visual appeal. When the top/bottom positions are not switched, manufacturing becomes easy.
Fig. 2 shows examples of a rope with holes comprising one kernmantle cord of circular cross-section shape folded back to provide two cords. The cords are continuously crossed in a pattern of sine waves with a phase difference of π and the crossed locations bonded together. Fig. 2(a) gives a simple overview of a rope with holes where the two cords are interlaced by switching their top/bottom positions at each crossed location. Fig. 2(b) gives a simple overview of a rope with holes where the two cords are interlaced without switching their top/bottom positions at each crossed location. Fig. 2(c) is a section view showing a bonded part 3 where only the outer sheaths are bonded together.

With the rope with holes proposed by the present invention, the at least three bonded parts formed at fixed intervals can be provided at desired positions on the rope. To be specific, they can be formed at the ends of the rope, in the middle part of the rope, or across the entire length of the rope. A rope having bonded parts across its entire length offers greater freedom for use because knots can be formed at desired positions. Bonded parts can also be formed in multiple locations, such as both ends only, one end and middle part(s), both ends and middle part(s), and multiple middle parts.

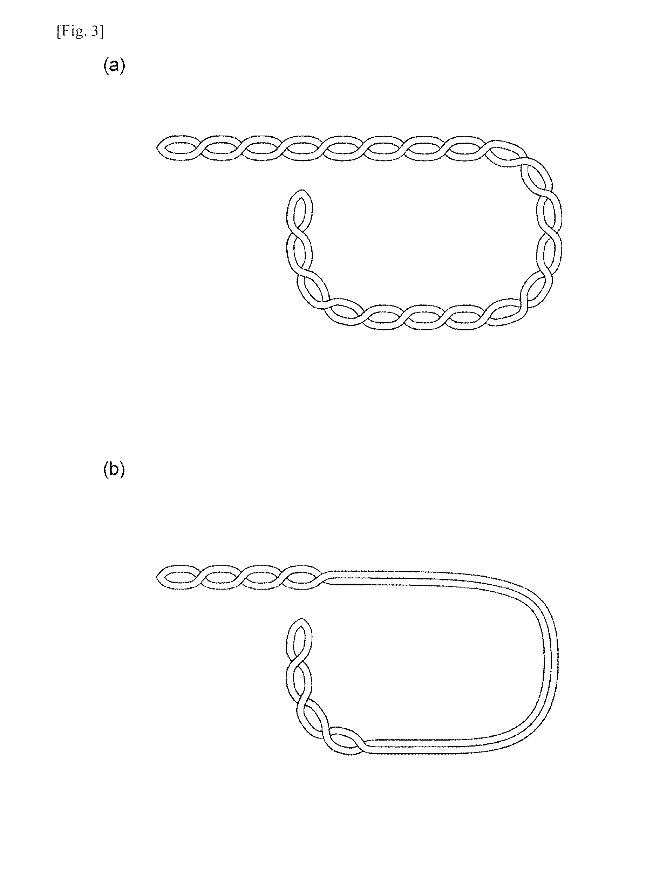

Fig. 3 shows examples of a rope with bonded parts. Fig. 3(a) shows a rope with holes conforming to the present invention with its bonded parts formed at fixed intervals across the entire length of the rope. Fig. 3(b) shows a rope with holes conforming to the present invention with its bonded parts formed at fixed intervals at both ends of the rope.

The rope with holes proposed by the present invention can be tied with ease with another rope by guiding the tip of the other rope through its multiple openings, and untied with ease by removing the other rope from the openings one by one. When inserting a rope, flip it upside down alternately before guiding it through each opening. One rope with holes can be tied to form a ring. Once a ring is formed, it will not become smaller even when tension is applied, because the knots are secured at the openings and do not move. Multiple ropes with holes can be tied together to form a longer rope.

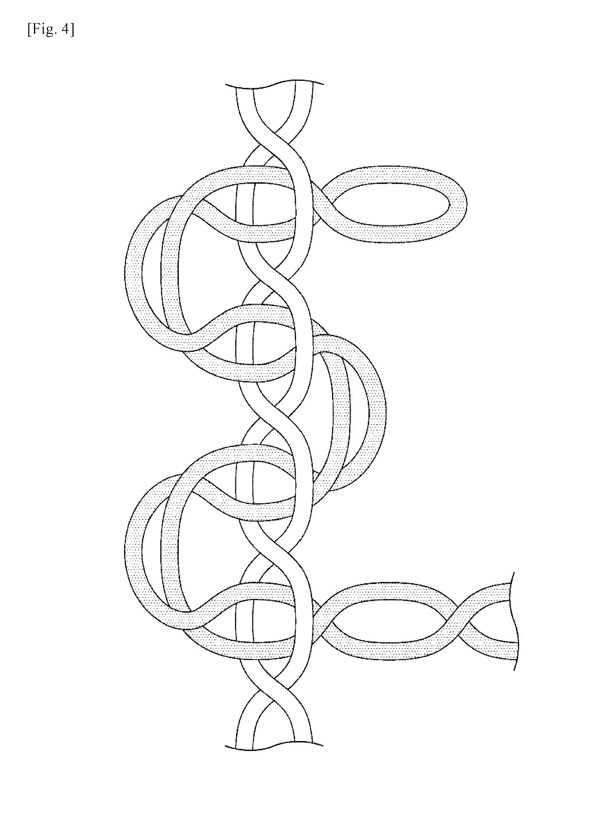

Fig. 4 shows a rope with holes with its tip guided through four openings in such a way that the tip is flipped upside down alternately as it goes through each opening.

Knots of ropes with holes conforming to the present invention are strong and do not loosen or come apart while the ropes are in use. This is because applying tension to the knots reduces the space between the two cords forming the openings and the rope guided through the openings is pinched strongly by the two cords forming the openings, resulting in increased contact area and greater maximum static friction force.

The rope to be guided through the openings of the rope with holes is not limited in any way, so long as it has an appropriate diameter for the size of the opening. Any general rope having no bonded part can also be guided through the openings of the rope with holes and tied together. Preferably the rope to be guided through the opening of the rope with holes is other rope with holes conforming to the present invention. When the tip of a rope with holes having bonded parts conforming to the present invention is guided through the openings of another such rope with holes, the narrow-width parts around the bonded parts of the inserted rope mesh with the wide-width parts around the openings of the base rope to make the knots stronger.

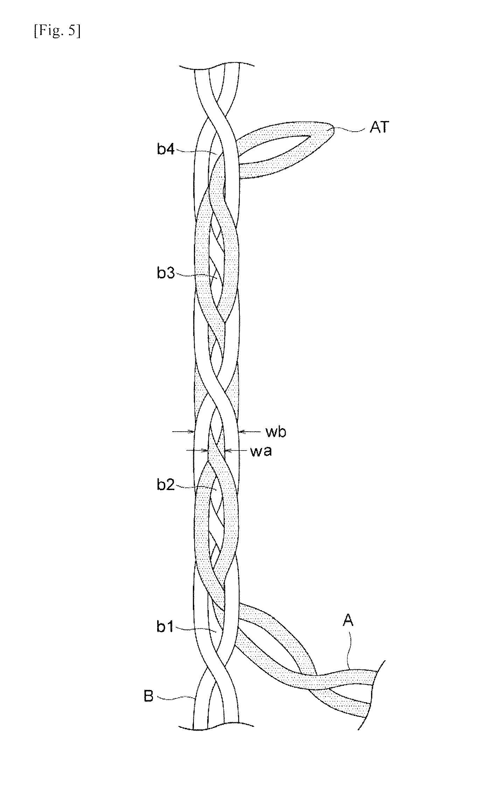

Fig. 5 shows the tip of a rope with holes guided through the four openings of another rope with holes, with tension applied to the ropes. The tip AT of the inserted rope A with bonded parts is guided through the four openings (b1 to b4) of the base rope B. The narrow-width parts wa around the bonded parts of the inserted rope A mesh with the wide-width parts wb around the openings of the base rope to create strong knots. When tension is applied in a direction parallel with the ropes with holes, the inserted rope will not separate even though it is guided through only two openings. If the direction in which tension is applied is indeterminable, then it is better to guide the inserted rope through three or more openings. The more openings through which the inserted rope is guided, the greater the maximum static friction force becomes due to increased contact area.

The intervals at which to form bonded parts can be determined according to the diameter of the other rope guided through the openings. If band-shaped cords are used, preferably the length of the opening is 1.2 times to 3 times the width of the band. Guiding the rope into the openings becomes difficult if the length of the opening is shorter than 1.2 times, while the openings longer than 3 times the width of the band make the ropes slip easily when tension is applied.

The rope with holes proposed by the present invention has elasticity derived from its unique structure of bonded parts and openings. As explained above, applying tension reduces the space between the two cords forming the openings, and the openings stretch in the direction of tension. This stretching of openings is elastic because the bonded parts exert shape restorability. Because the rope with holes proposed by the present invention has elasticity derived from its structure itself, it has a higher rate of elongation and excellent impact absorption capability compared to conventional ropes. In particular, ropes with holes comprising highly rigid cords like kernmantle cords have high shape restorability and are thus flexible like springs. This structure-derived elasticity can be adjusted by the magnitude of the crossing angle at the bonded part and also by the number of bonded parts. To be specific, the larger the crossing angle and greater the number of bonded parts, the more stretchable the rope becomes. The modulus of elasticity should be adjusted according to the intended purpose of the rope with holes. In the case of a rope with holes comprising kernmantle cords, bonding them together on the outside alone results in their outer sheaths absorbing any twisting caused by application of strong force, with the inner cores not affected at all. If parts of the inner cores are also bonded to each other along with the outer sheaths, on the other hand, the elasticity improves due to greater shape preserving property and shape restorability of the bonded parts. Whether to bond together parts of the inner cores along with the outer sheaths should be selected as deemed appropriate according to the intended purpose of the rope with holes.

The rope with holes proposed by the present invention can easily be held onto by inserting fingers or toes into the openings. Applying tension reduces the space between the two cords forming the openings, but since the rotating angle of the bonded parts is limited and the clearance between the two cords is maintained, the fingers and toes in the openings will not be injured.

The rope with holes proposed by the present invention can be tied without using a buckle, loop clutch, or other equipment. Since it can be tied without using any equipment, the rope with holes proposed by the present invention allows its strength to be utilized fully.

Next, the strength of the rope with holes proposed by the present invention is explained. The rope with holes proposed by the present invention has openings and bonded parts. First, the strength of the openings is explained. When tension is applied to the rope with holes proposed by the present invention, the two cords forming the openings become more parallel with each other except for the areas around the bonded parts. Since the tension applied to the parallel areas is the same as the tension applied to the two cords, the strength of the openings is equal to the strength of the two cords.

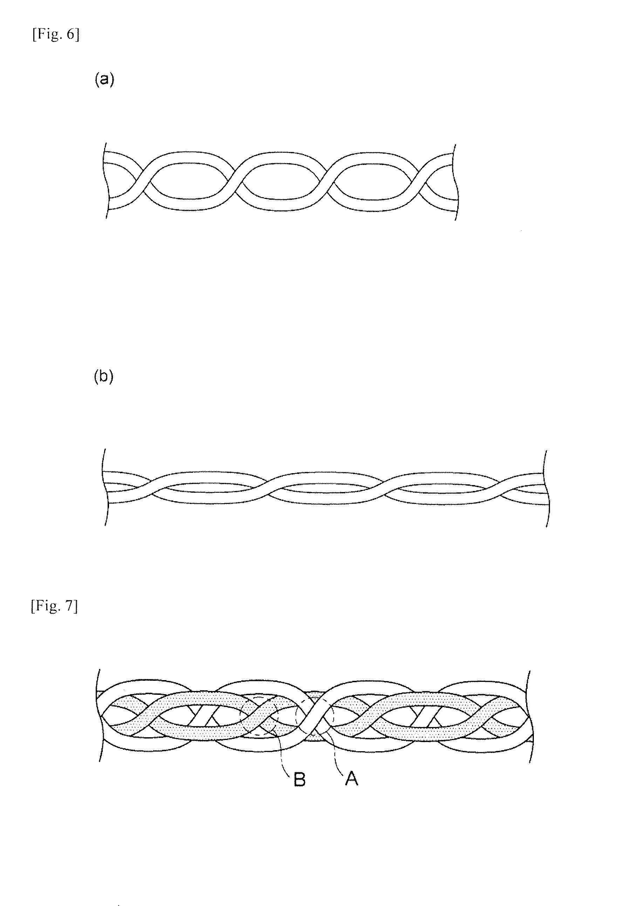

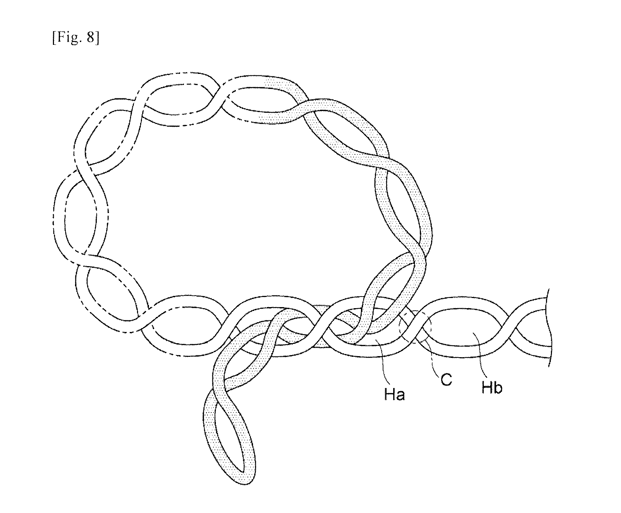

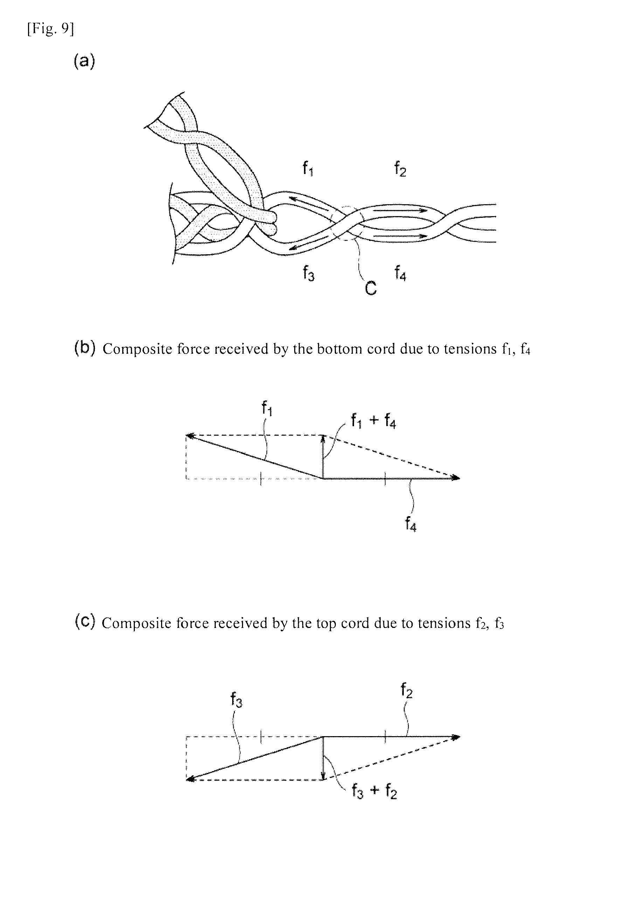

Next, the strength of the areas near the bonded parts of the rope with holes proposed by the present invention is explained in different situations. When a rope with holes conforming to the present invention is tied with another rope guided through its openings, the bonded parts may be in one of the following conditions (i) to (iii).
(i) Example where the other rope is not guided through either of the openings on both sides of the bonded part
   With respect to a rope with holes conforming to the present invention with no other rope inserted in it, Fig. 6(a) shows a condition where tension is not applied, while Fig. 6(b) shows a condition where tension is applied and the rope is stretched. When tension is applied, the rope with holes stretches and its bonded parts deform by twisting. The bonded parts only receive in-plane twisting force, and they receive no force applied in a direction vertical to the bonded surface, or specifically force that would separate the bonded parts. This in-plane twisting force on the bonded part is received by the entire bonded surface. Since the bonded parts are formed sturdily and the maximum angle by which they can rotate is limited, the flexed cords in the areas near the bonded part will fracture before the bonded parts are broken by the twisting force.
(ii) Example where other rope is guided through the openings on both sides of the bonded part
   Fig. 7 shows a condition where the other rope with holes is guided through multiple openings of a rope with holes conforming to the present invention. At bonded part A where the other rope with holes is guided through the openings on both sides, the inserted rope prevents the two cords forming the openings from running completely parallel with each other, even when tension is applied. Because the twisting angle of bonded part A is smaller than that of the bonded part in (i) above, and also because the force that tries to twist bonded part A is small, bonded part A is more resistant to breaking than the bonded part in (i).
   In addition, bonded part B of the inserted rope with holes receives tension in the same condition as the bonded part in (i) above does. However, since the elongation of the inserted rope with holes is equal to the elongation of the base rope with holes, the inserted rope with holes does not stretch to the extent that the two cords forming the openings run parallel with each other. Accordingly, the twisting angle of bonded part B is smaller than when the rope with holes alone is stretched, meaning that bonded part B is resistant to breaking.
   Consequently the bonded part in (ii) is stronger than the bonded part in (i).
(iii) Example where the other rope is guided through only one of the openings on both sides of the bonded part
   Fig. 8 shows a branching part of a ring formed by guiding a tip of a rope with holes conforming to the present invention through its own openings in middle parts. At bonded part C, the rope with holes is guided only through one opening Ha, of the adjacent openings Ha, Hb. Here, the force applied to bonded part C is shown in Fig. 9(a), force applied to the bottom cord at bonded part C is shown in Fig. 9(b), and force applied to the top cord at bonded part C is shown in Fig. 9(c). Tension f1 and tension f4 apply to the bottom cord at bonded part C, while tension f3 and tension f2 apply to the top cord. The horizontal component of tension f1 is equal to the horizontal component of tension f3, where their directions are opposite to those of tensions f4 and f2, respectively, while their magnitudes are the same as with tensions f4 and f2. Accordingly, the composite force received by the bottom cord at bonded part C is calculated by f1 + f4 per Fig. 9(b). Similarly, the force received by the top cord at bonded part C is calculated by f3 + f2 per Fig. 9(c). This means that bonded part C receives a force in the direction of shifting the bonded surface in plane vertically to the rope, and the magnitude of this force increases as the slopes of tensions f1 and f3 increase. Since the lateral symmetry of forces acting upon the bonded part has tipped, the force applied to the bonded part in (iii) is greater than the forces applied to the bonded parts in (i) and (ii) above, thus making this bonded part more vulnerable to breaking.

As explained above, applying tension to a rope with holes conforming to the present invention that has been tied by inserting another rope in its openings, causes the bonded part in (iii) to break first.

The tensile strength of a rope with holes as a whole does not exceed n x P when the rope with holes is formed by n number of cords. Under the present invention, the rope with holes fractures when the load reaches n x P if the breaking strength of the bonded part is n x P or more. If the breaking strength of the bonded part is less than n x P, the bonded part breaks before the rope with holes fractures. Since the rope with holes is yet to fracture when the bonded part is broken, the initial breaking of the bonded part foretells the limit of the rope with holes and helps prevent the worst situation, which is fracturing of the rope. Considering the safety margin, preferably the bonded part has a breaking strength corresponding to the pulling of 0.8 nP to 0.97 nP cords, and more preferably it has a breaking strength corresponding to the pulling of 0.9 nP to 0.95 nP cords.

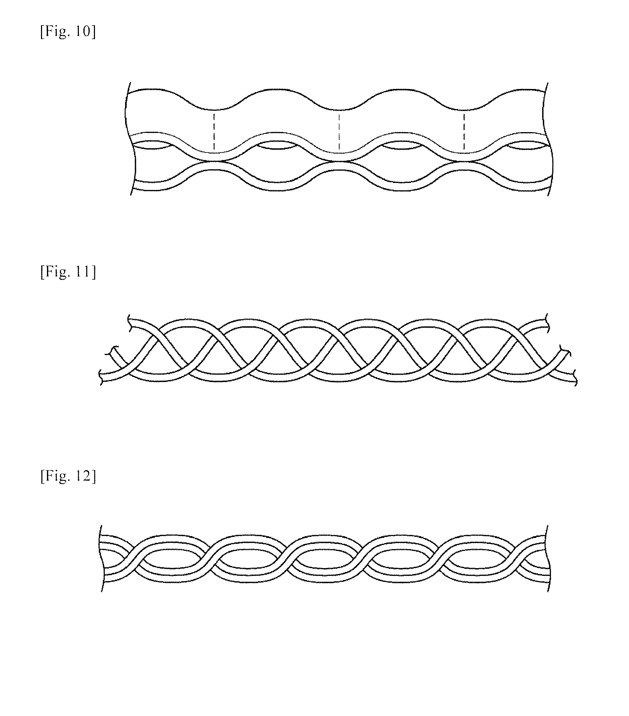

Fig. 10 shows a rope with holes according to an embodiment of the present invention, comprising two band-shaped cords interlaced and their surfaces bonded together at fixed intervals. In addition, Fig. 11 shows a rope with holes according to another embodiment of the present invention, comprising three cords interlaced in a pattern of sine waves with a phase difference of 2π/3 and their crossed locations bonded together, while Fig. 12 shows a rope with holes comprising two thin-string cords interlaced and continuously crossed in a pattern of sine waves with a phase difference of π.

Ropes with holes conforming to the present invention are characterized in that they can be tied and untied with ease and do not loosen or separate while in use, and thus can be handled effortlessly even by those not familiar with ropework. In addition, these ropes can be tied without using a buckle, loop clutch, or other equipment and thus can be utilized without reducing the excellent strength of the rope.

Ropes with holes conforming to the present invention can be used on animals as pet leads, livestock bridles, driving reins, etc. These ropes offer high general utility because knots can be formed at desired positions according to the size of the animal. Furthermore, a rope with holes having bonded parts formed across its entire length can be looped and tied at a desired position to form a ring, which makes it possible to form a collar at one end, body harness in the middle, and handle on the other end of the rope. A loop clutch can be attached to a rope with holes conforming to the present invention and the loop clutch connected to the metal clasp of a conventional collar. When the present invention is applied as a pet lead, its openings deform to absorb any force applied to the rope as a result of sudden, momentary action, meaning that both the animal and person leading it feel less shock and any damage to the lead is prevented.

Ropes with holes conforming to the present invention can easily be held onto by guiding fingers and toes through the openings, and the fingers and toes in the openings will not be injured. Since the knots are secured by the openings, the formed rings do not become smaller. This makes these ropes ideal for rescue operations and mountaineering.

These ropes are also ideal for outdoor use, fastening cargos, and towing vehicles, because even those not familiar with ropework can easily form strong knots.

These ropes can be applied to mountaineering, towing vehicles, marine vessels, fishing, slinging work, etc., because once tied properly, the inserted rope will not separate even when tension is applied and the bonded parts will break first before the limit of the rope is reached and the rope fractures. In particular, ropes with holes comprising band-shaped cords are ideal for slinging work because the ropes will not move by rolling.

Ropes with holes conforming to the present invention can be used for wide applications beyond animals, rescue operations, mountaineering, outdoor use, fastening cargos, towing vehicles, marine vessels, fishing, and slinging work as mentioned above. For example, the colors of cords and crossing orders can be changed to enhance the visual appeal of ropes for use as mobile phone straps, belts for pants and handbags, and replacements for other items of daily use.

### Example 1

A kernmantle nylon rope of 8 mm in diameter (Product name: Nylon Rope 8, manufactured by Mountain Dax) was folded at the center and the two rope parts were interlaced and continuously crossed in a pattern of sine waves with a phase difference of π and the top/bottom positions of the rope parts switched at each crossed location, and the crossed locations were fused. Bonded parts were formed across the entire length of the rope.

When tensile strength test was conducted using a tensile compressive tester (Strograph V10-C, manufactured by Toyo Seiki), the nylon rope alone had a tensile strength of 18.6 kN.

A tip of the rope with holes was guided through continuous openings in the middle part of the rope to form a ring. When tensile strength test was conducted on the branching part, the bonded part in the condition of (iii) where the rope with holes was guided only through one of the openings on both sides, broke under a load of 34.3 kN. The breaking load of the bonded part is expressed by 0.92 x 2 x 18.6 (= 34.3). When the load was increased, the rope fractured under a load of 36.3 kN. The inserted rope with holes neither came off nor did the knots come apart.

### Example 2

A collar part was formed at one end and a ring for use as a handle part was created on the other end of the rope with holes created in Example 1, to obtain a collar and lead for a large dog. According to the assumed neck size of a dog, the collar part was formed by guiding the tip of the rope through its five openings.

Collars for large dogs made of thick leather belts tend to fracture in only two weeks to one month, if used on dogs with strong forces, as the leather and metal part separate from each other, for example. Even collars made of metal chains will fracture in a month or so due to metal fatigue. Collar/lead combination ropes made of ropes with holes conforming to the present invention, on the other hand, will not fracture after a long period of use and will not deteriorate except that the colors will fade. In addition, while collars made of leather, metal, and other hard materials cause the dog to lose its hair around the neck or inflict injuries as a result of rubbing of collar parts against the skin, this is not the case with collar/lead combination ropes based on the constitutions presented herein.

### Example 3

Two band-shaped cords (Nylon Tubular Tape, 19 mm in width, manufactured by Edelweiss) were placed on top of each other and sewn together at intervals of 38 mm, or twice the width of the cord, to create a rope with holes.

As it comprises band-shaped cords, the rope has low extensibility and is suitable for slinging work when working with a crane. In addition, while a rope of roughly circular shape rolls and moves when it is used to hoist an object, the belt sling comprising band-shaped cords can secure an object easily as it envelops even projected parts of the object.

## Claims

1. A rope with holes having at least three bonded parts obtained by bonding two cords together at fixed intervals, as well as openings formed between adjacent bonded parts.

2. A rope with holes according to Claim 1, **characterized in that** the bonded parts are provided across an entire length of the rope.

3. A rope with holes according to Claim 1 or 2, **characterized in that**, when a tensile strength of one cord forming the rope with holes is given by P and a number of cords forming the rope with holes is given by n, and when only one of the openings on both sides of a bonded part has another rope with holes guided through it, the bonded part has a breaking strength corresponding to a pulling of 0.8 nP to 0.97 nP cords.

4. A rope with holes according to any one of Claims 1 to 3, **characterized in that** the two cords are continuously crossed in a pattern of sine waves with a phase difference of π and then bonded together at crossed locations.

5. A rope with holes according to any one of Claims 1 to 4, **characterized in that** the two cords have a cross-section of roughly circular shape.

6. A rope with holes according to Claim 5, **characterized in that** the cords with a cross-section of roughly circular shape are kernmantle cords.

7. A rope with holes according to any one of Claims 1 to 4, **characterized in that** the two cords are band-shaped.

8. A rope with holes according to Claim 7, **characterized in that** bonding at fixed intervals is done in such a way that a length of the opening becomes 1.2 times to 3 times a width of the band.

9. A pet lead constituted by a rope with holes according to any one of Claims 1 to 8.

10. A crane sling constituted by a rope with holes according to any one of Claims 1 to 8.
